## Europäisches Patentamt

## European Patent Office

## Office européen des brevets

(19)

(11) Veröffentlichungsnummer: **0 166 237**
A2

(12) **EUROPÄISCHE PATENTANMELDUNG**

(21) Anmeldenummer: **85106473.3**

(22) Anmeldetag: **25.05.85**

(51) Int. Cl.⁴: **B 01 D 13/01,** A 61 M 1/18

(30) Priorität: **23.06.84 DE 3423258**

(43) Veröffentlichungstag der Anmeldung: **02.01.86**
**Patentblatt 86/1**

(84) Benannte Vertragsstaaten: **BE FR GB IT NL SE**

(71) Anmelder: **SECON Gesellschaft für Separations- und Concentrationstechnick mbH, Wagenstieg 5, D-3400 Göttingen (DE)**

(72) Erfinder: **Lüning, Rudolph, Am Rischen 5 d, D-3400 Göttingen (DE)**
Erfinder: **Weickhardt, Ludwig, Hasenwinkel 8, D-3406 Bovenden (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

(54) **Kapillardialysator.**

(57) Ein Kapillardialysator weist ein in der Regel rohrförmiges Gehäuse (1) und ein Bündel darin beidendig durch eine Einbettmasse (3) fixierter sowie gegeneinander und gegenüber dem Gehäuse abgedichteter Kapillaren (2) auf, die in je einer Stirnfläche (4) enden, an die je eine Ein- bzw. Ausströmkammer (8, 9) für das Blut anschließt. Zwischen den Einbettmassen (3) ist um die Kapillaren (2) herum eine Dialysatkammer mit zwei gehäuseseitigen Anschlüssen vorgesehen. Mindestens eine der beiden Stirnflächen (4) aus Einbettmasse (3) und Kapillaren (2) ist mit einer Beschichtung (15) versehen.

0166237

- 1 -

Kapillardialysator

Die Erfindung bezieht sich auf einen Kapillardialysator mit
einem in der Regel rohrförmigen Gehäuse und einem Bündel darin
beidendig durch eine Einbettmasse fixierter sowie gegeneinander
und gegenüber dem Gehäuse abgedichteter Kapillaren, die in je
einer Stirnfläche enden, an die je eine Ein- bzw. Ausströmkammer
für das Blut anschließt, und mit einer zwischen den Einbettmassen um die Kapillaren herum vorgesehenen Dialysatkammer mit
zwei gehäuseseitigen Anschlüssen. Ein solcher Kapillardialysator entspricht der üblichen Ausbildung und Ausführung.

Kapillardialysatoren mit einem rohrabschnittförmigen Gehäuse
werden bekanntlich in der Weise hergestellt, daß ein Bündel Kapillaren, also sehr feine dünne Rohre mit einem Innendurchmesser von etwa 0,2 mm und einer Wandstärke von 5 - 20 μm in das
rohrabschnittförmige Gehäuse eingeschoben werden. Beide Enden
des rohrabschnittförmigen Gehäuses werden durch je eine Abdeckkappe verschlossen. Durch die Anschlüsse für das Dialysat hindurch wird an beiden Endbereichen Einbettmasse zwischen das
Bündel der Kapillaren und das rohrabschnittförmige Gehäuse
eingegeben. Durch einen Schleudervorgang um eine mittlere Querachse des rohrabschnittförmigen Gehäuses verteilt sich die Einbettmasse zwischen den Kapillaren und zwischen den Kapillaren
und der Gehäusewandung, wobei der Raum bis zu den Abdeckkappen
ausgefüllt wird. Durch die dann erstarrte Einbettmasse sind die
Kapillaren in dem rohrabschnittförmigen Gehäuse gleichzeitig
fixiert und abgedichtet. Nach der Entfernung der nur für das
Eingießen der Einbettmasse erforderlichen Abdeckkappen wird
das Bündel der Kapillaren, die ursprünglich mit entsprechend
größerer Länge in das rohrförmige Gehäuse eingeschoben wurden,
beidendig abgeschnitten. Dieser Schnitt kann durch einen Stanzvorgang auch erfolgen. Bei diesem Schnitt entsteht eine Stirn-

- 2 -

fläche durch die Kapillaren und die Einbettmasse hindurch, die an der Gehäusewandung endet. Durch diesen Schnitt entstehen jedoch in nachteiliger Weise Rauhigkeiten an der Stirnfläche, und zwar sowohl im Bereich der Einbettmasse als auch im Bereich der Kapillarenden. Die Kapillaren selbst weisen auch oft Einrisse in ihrer Rohrwandung auf, die meist in nachteiliger Weise nach dem Innenraum der Rohrwandung der einzelnen Kapillare hin gerichtet sind. Diese Einrisse werden bei elektronenmikroskopischer Vergrößerung der Schnittfläche sichtbar. Es sind auch Ablöseerscheinungen zwischen der Kapillarwand und der Einbettmasse zu beobachten. Die beschriebenen Rauhigkeiten können als Auslöser bzw. als Keim wirken und durch ihre Form und Anwesenheit die Gefahr von Gerinnungserscheinungen des Blutes bei der Verwendung des Dialysators begünstigen. Infolge dieser Gerinnungserscheinungen kommt es dann zu Verstopfungen der einzelnen Kapillare, insbes. eingangsseitig, also im Bereich der Einströmkammer. Hierdurch wird die Dialysierfläche des Dialysators durch Ausfall der verstopften Kapillaren verkleinert. Die erforderliche Leistung ist nicht mehr vorhanden. Als weiterer Nachteil ergibt sich ein entsprechender Blutverlust des Patienten, da auch eine Auswaschmöglichkeit infolge der Verstopfungen nicht gegeben ist.

Der Erfindung liegt die Aufgabe zugrunde, die beschriebenen Nachteile zu bekämpfen und einen Kapillardialysator der eingangs beschriebenen Art zu schaffen, bei dem bei Gebrauch der Ausfall von Kapillaren und damit der Blutverlust für den Patienten erniedrigt ist.

Erfindungsgemäß wird dies dadurch erreicht, daß mindestens eine der beiden Stirnflächen aus Einbettmasse und Kapillaren mit einer Beschichtung versehen ist. Durch die Aufbringung dieser Beschichtung auf die geschnittenen Stirnenden aus Einbettmasse und Kapillaren findet eine Glättung und Verrundung der
Oberfläche statt. Die Verletzungen der Oberfläche im Mikrobereich, die durch den Schnitt hervorgerufen werden, werden ausgeglichen. Fremdkörper werden eingebettet, Risse ausgefüllt und
insgesamt wird die Oberflächenrauhigkeit vermindert, so daß
die Gefahr solcher rauhen Stellen, Ausgangspunkt für eine
Blutgerinnung zu sein, stark vermindert ist. Es versteht sich,
daß die Beschichtung so aufgebracht ist, daß die Kapillaröffnungen der Kapillaren von der Beschichtung nicht überspannt und
nicht abgedeckt sind. Die Kapillaren müssen natürlich offen
bleiben, weil durch sie der Fluß des Blutes erfolgt. Es ist
aber durchaus möglich und auch sinnvoll, die Beschichtung auch
um die Innenkante der einzelnen Kapillare herum bis zu einer
gewissen Tiefe an der Innenwand der Kapillare vorzusehen, damit
auch die innere scharf geschnittene Kante jeder Kapillare verrundet wird. Damit ergeben sich günstige geometrische Bedingungen am Eintritt in jede einzelne Kapillare hinsichtlich der
beabsichtigten Blutströmung.

Besonders geeignet ist eine Beschichtung aus Polyurethan, wobei
die Kapillaren aus regenerierter Zellulose bestehen. Das Polyurethan haftet auf der Zellulose und wird von dort auch bei
Benetzen mit Flüssigkeit nicht abgelöst.

Die Beschichtung, die in aller Regel sehr dünn ausgebildet ist
und somit eine Glätt- und Einebnungsfunktion erfüllt, kann aber
auch aus einem Material bestehen, das eine poröse Filterstruktur
aufweist und die Anlagerung von Eiweißstoffen aus dem Blut
gestattet. Damit wird eine Oberfläche besonderer Art geschaffen,
die durch Anlagerung von eigenen Eiweißstoffen aus dem Blut
besonders blutfreundlich, und zwar für jeden einzelnen Patienten,
gestaltet wird. Es versteht sich, daß diese Gestaltung erst
während der Benutzung des Dialysators eintritt, jedoch ist durch
die Verwendung einer Beschichtung in Form einer porösen Filterstruktur die Möglichkeit hierzu geschaffen. Eine solche poröse
Filterstruktur kann beispielsweise dann hergestellt werden,
wenn die Beschichtung aus einem in zwei Lösungsmitteln gelösten
Kunststoff besteht, wobei die beiden Lösungsmittel unterschiedliche Verdampfungseigenschaften aufweisen. Nach dem Aufbringen
der Beschichtung verdampft zuerst das Lösungsmittel 1 und die
Konzentration des Kunststoffes im Lösungsmittel 2 steigt an.
Vor dem Verdampfen des Lösungsmittels 2 entsteht ein örtlich
unterschiedlicher Fällungsvorgang, wobei die gewünschte poröse
Filterstruktur entsteht. Schließlich verdampft auch das Lösungsmittel 2 vollständig.

Es ist aber auch möglich, daß die Beschichtung aus zwei Schichten besteht, von denen die zuerst aufgebrachte den Haftgrund
für die zweite Beschichtung bildet und die zweite Beschichtung
gemäß den Merkmalen des Anspruches 4 ausgebildet ist. Die erste
Beschichtung erfüllt somit im wesentlichen Glätt- und Einebnungsfunktion, während die zweite, darauf aufgebrachte zusätzliche
Schicht der Beschichtung die poröse Filterstruktur erbringt. Es
ist auch möglich, daß die Beschichtung auf der Oberfläche der
gesamten Ein- bzw. Ausströmkammer vorgesehen ist. Hierfür kommt
jedoch die Beschichtung mit der porösen Filterstruktur allein zur
Anwendung, weil die Oberfläche der Ein- und Ausströmkammer ansonsten von einem Gehäusedeckel gebildet wird, an welchem ein
Schnitt- oder Stanzvorgang nicht stattfindet. Selbstverständlich
kann diese (zweite) Beschichtung mit der porösen Filterstruktur
auch allein auf die Stirnfläche der Einbettmasse und der Kapillaren aufgebracht werden. Die Beschichtung mit der Filterstruktur kann im wesentlichen aus Polysulfon, Polyamid, Polymethylmethacrylat, Polycarbonat oder Zelluloseacetaten bestehen.

Die erste Beschichtung kann eine Dicke von etwa 5 - 20 µm
und die zweite Beschichtung von etwa 5 - 50 µm aufweisen.
Bei derartig dünnen Beschichtungen besteht nicht die Gefahr,
daß die einzelne Kapillare durch die Aufbringung der Beschichtung verstopft oder unzumutbar verengt wird.

Die Erfindung läßt sich auch durch die Verwendung einer Beschichtung auf den geschnittenen Stirnflächen der Kapillaren
und der Einbettmasse eines Kapillardialysators zur Verminderung
der Gerinnungsgefahr für das Blut kennzeichnen.

Die Erfindung wird anhand von Ausführungsbeispielen weiter
beschrieben. Es zeigen:

Fig. 1    einen Schnitt durch einen Kapillardialysator,

Fig. 2    eine Schnittdarstellung des einen Endbereichs des
          Kapillardialysators vor der Anbringung des Schnittes,

Fig. 3    eine Schnittdarstellung des Endes einer einzelnen
          Kapillare mit der Darstellung einer einfachen Beschichtung    und

Fig. 4    eine Schnittdarstellung des Endes einer einzelnen Kapillare mit der Darstellung einer ersten und einer zweiten
          Beschichtung.

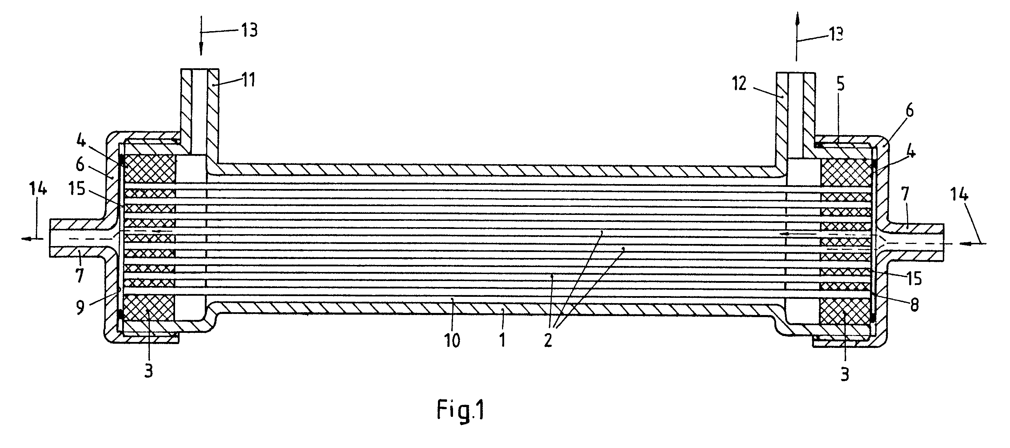

Der in Fig. 1 dargestellte Kapillardialysator weist ein rohrabschnittförmiges Gehäuse 1 auf, in welchem ein Bündel aus vielen
Kapillaren 2, die in Fig. 1 in stark relativ vergrößerter Darstellung wiedergegeben sind, angeordnet sind. An beiden Enden
ist das Bündel der Kapillaren 2 in einer Einbettmasse 3 eingeformt, die das Bündel der Kapillaren 2 nicht nur innerhalb
des Gehäuses 1 fixiert, sondern die Kapillaren 3 untereinander und gegenüber der Wandung des Gehäuses 1 abdichtet. Die Einbettmasse 3 und die Kapillaren enden in einer Stinrfläche 4.
Die Enden des rohrabschnittförmigen Gehäuses 1 sind mit einem
Außengewinde 5 versehen, auf die jeweils ein Deckel 6 unter
Zwischenlage einer nicht dargestellten Dichtung aufgeschraubt
wird. Der Deckel 6 besitzt einen Anschlußstutzen 7 zum Anschluß
einer Schlauchleitung. Am einen Ende des Gehäuses ist auf diese
Art und Weise eine Einströmkammer 8 und am anderen Ende eine
Ausströmkammer 9 gebildet. Die beiden Kammern 8 und 9 sind
grundsätzlich gleich bzw. ähnlich ausgebildet, so daß die Verwendung des Kapillardialysators in der einen oder anderen Richtung erfolgen kann. Es versteht sich, daß durch den einen Anschlußstutzen 7 das Blut in die Einströmkammer 8 eintritt, sich
von dort auf die Kapillaren 2 verteilt und diese durchströmt.
In der Ausströmkammer 9 sammelt sich das Blut aus den einzelnen
Kapillaren 2 und strömt durch den Anschlußstutzen 7 wieder aus.

Der zwischen den Kapillaren 2 vorhandene Innenraum 10 zwischen
den Einbettmassen 3 ist für das Dialysat bestimmt. Über zwei
Stutzen 11 und 12 fließt das Dialysat gemäß den Pfeilen 13, während sich das Blut gemäß den Pfeilen 14 bewegt. Auf der Stirnfläche 4 ist eine Beschichtung 15 aufgebracht, die sich über
die Einbettmasse 3 hinweg erstreckt und auch die Stirnenden der
Kapillaren 2 erfaßt. Diese Beschichtung 15 dient dazu, die Rauhigkeit zu vermindern, Fremdkörper einzuschließen, spitze Materialstücke zu verrunden und insgesamt damit eine für das Blut
verträgliche Oberfläche zu schaffen, hinsichtlich der die Gefahr von Blutgerinnungen wesentlich vermindert ist.

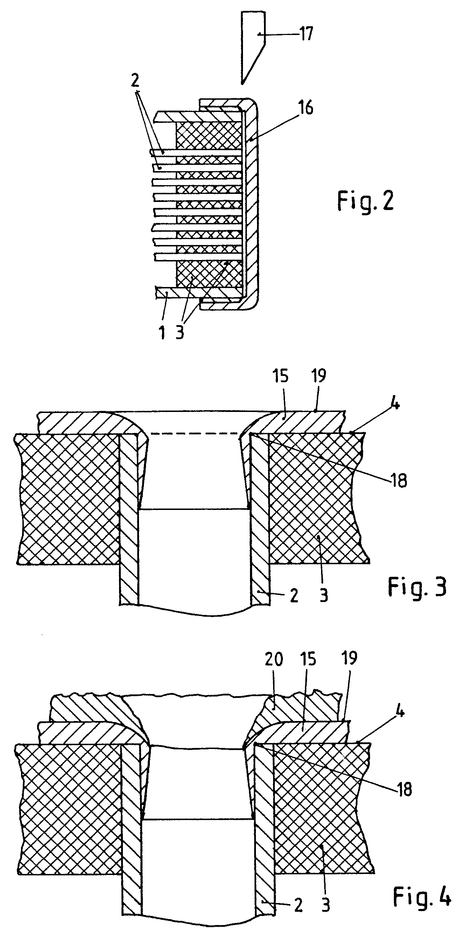

Fig. 2 verdeutlicht einen Vorgang während des Herstellens des
Kapillardialysators. Hierbei wird das rohrabschnittförmige Gehäuse 1 ohne die Verwendung der Deckel 6 mit gesonderten Abdeckkappen 16 verschlossen, nachdem ein Bündel von Kapillaren
2 mit etwas größerer Länge in das Gehäuse 1 eingebracht worden Durch die Stutzen 11 und 12 wird Einbettmasse 3 in nicht ausgehärtetem Zustand eingeführt. Anschließend das derart vorbereitete Gehäuse durch einen Schleudervorgang um eine mittlere Querachse in Drehung versetzt, wobei der Zwischenraum zwischen den Enden des Gehäuses und den Abdeckkappen 16 von der Einbettmasse ausgefüllt wird, die in diesem Stadium aushärtèt. Es versteht sich, daß sich die Einbettmasse 3 auch um einen gewissen Betrag nach innen von den Stirnenden des Gehäuses 1 aus gesehen hinein erstreckt, so daß eine feste und dichte Verbindung der Stirnbereiche der Kapillaren 2 mit dem Gehäuse 1 eintritt. Nach der Aushärtung werden die Abdeckkappen 16 entfernt und es erfolgt ein Schnitt mit Hilfe eines Messers 17 bzw. einer Stanzvorrichtung derart, daß überschüssige Einbettmasse 3 mit den Enden der Kapillaren 2 abgeschnitten wird. Es entsteht bei diesem Schnitt beidendig je eine Stirnfläche 3, die in diesem Zustand beachtliche Oberflächenrauhigkeiten aufweist. Oft sind auch Einrisse zwischen der Einbettmasse 3 und den Enden der Kapillaren 2 zu beobachten. Auch Teile der Kapillaren hängen fransenförmig in den Innenraum einer Kapillare hinein. All diese Rauhigkeiten stellen eine Gefahr für das Gerinnen des Blutes während der Benutzung dar. Diese Rauhigkeiten, die im Mikrobereich liegen, werden nun durch die Beschichtung 15 (Fig. 3) beseitigt, eingeebnet und geglättet. Aus der extrem vergrößernden Darstellung der Fig. 3 ist ersichtlich, wie sich auch die Beschichtung 15 um die Innenkante 18 des Endes jeder Kapillare 2 herum erstreckt und sogar bis zu einer gewissen Tiefe in die einzelne Kapillare 1 hinein fortsetzt, so daß auf jeden Fall die scharfe Innenkante 18 verrundet ist. Die Dicke dieser Beschichtung 15 liegt in der Größenordnung von 5 - 20 µm. Die Beschichtung 15 weist eine vorzugsweise glatte und ebene Oberfläche 19 auf, an der Blutbestandteile nicht haften. Besonders geeignet ist Polyurethan für diese Beschichtung 15, während gleichzeitig die Kapillaren 2 aus regenerierter Zellulose bestehen können. Das Polyurethan haftet auf der Zellulose besonders gut und wird auch durch

- 8 -

Benetzen mit Flüssigkeit nicht abgelöst. Statt der Beschichtung 15 mit glatter Oberfläche 19 kann auch eine Beschichtung 20 mit poröser Filterstruktur auf die Stirnfläche 4 allein aufgebracht werden.

Fig. 4 zeigt die weitere Möglichkeit, daß die Beschichtungen 15 und 20 nacheinander, also in zwei Schichten übereinander aufgebracht sind. Die poröse Filterstruktur dient dazu, eine Grundlage für die Anlagerung von Eiweißstoffen aus dem Blut zu schaffen, so daß die Oberfläche insgesamt als blutfreundlich und -verträglich anzusehen ist. Die Beschichtung 20 mit der porösen Filterstruktur kann nicht nur auf die Stirnfläche 4, sondern auch auf die übrige Oberfläche der Einströmkammer 8 und der Ausströmkammer 9 aufgebracht werden, also im wesentlichen auf die Innenseiten der Deckel 6. Besonders wichtig ist die einströmseitige Anordnung.

Eine Beschichtung 20, die eine poröse Filterstruktur ergibt, besteht in der Regel aus einem Kunststoff, der in zwei Lösungsmitteln gelöst ist, wobei die beiden Lösungsmittel unterschiedliche Verdampfungseigenschaften haben. Dabei hat sich folgendes Verhältnis bewährt. Als Kunststoff wird 7,5 g Polykarbonat eingesetzt, welches in 92,5 g Methylenchlorid als erstes Lösungsmittel mit hoher Verdampfungsgeschwindigkeit gelöst ist. Zusätzlich ist der Kunststoff in 12,5 g Dimethylacetamid als zweites Lösungsmittel mit vergleichsweise langsamer Verdampfungsgeschwindigkeit gelöst. Statt Dimethylacetamid kann auch Dimethylformamid Anwendung finden. Nach der Aufbringung einer derartigen Beschichtung 20 verdampft zuerst das erste Lösungsmittel Methylenchlorid und die Konzentration des Kunststoffes im Lösungsmittel 2, dem Dimethylacetamid steigt an. Beim Verdampfen des Lösungsmittels 2, dem Dimethylacetamid entsteht eine örtlich unterschiedliche Fällungsreaktion, wobei die poröse faserige Struktur entsteht. Anschließend verdampft das zweite Lösungsmittel vollständig.

0166237

- 9 -

B e z u g s z e i c h e n l i s t e :

 1 = Gehäuse

 2 = Kapillare

 3 = Einbettmasse

 4 = Stirnfläche

 5 = Außengewinde

 6 = Deckel

 7 = Anschlußstutzen

 8 = Einströmkammer

 9 = Ausströmkammer

10 = Innenraum

11 = Stutzen

12 = Stutzen

13 = Pfeil

14 = Pfeil

15 = Beschichtung

16 = Abdeckkappe

17 = Messer

18 = Innenkante

19 = Oberfläche

20 = Beschichtung

0166237

# BIBRACH & REHBERG

## ANWALTSSOZIETÄT

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPEENS

TELEFON: (0551) 45034/35

TELEX: 96616 bipat d

POSTSCHECKKONTO: HANNOVER
(BLZ 25010030) NR. 115763-301

BANKKONTEN: DEUTSCHE BANK AG GÖTTINGEN
(BLZ 26070072) NR. 01/85900
COMMERZBANK GÖTTINGEN
(BLZ 26040030) NR. 6425722

| IHR ZEICHEN<br>YOUR REF.<br>VOTRE REF. | IHR SCHREIBEN VOM<br>YOUR LETTER<br>VOTRE LETTRE | UNSER ZEICHEN<br>OUR REF.<br>NOTRE REF. | D-3400 GÖTTINGEN,<br>PÜTTERWEG 6 |
| --- | --- | --- | --- |
| | | 11.721/mi4 | 21.05.1985 |

SECON Gesellschaft für Separations- und Concentrationstechnik mbH, Wagenstieg 5, 3400 Göttingen

## P a t e n t a n s p r ü c h e :

1. Kapillardialysator mit einem in der Regel rohrförmigen
Gehäusen und einem Bündel darin beidendig durch eine Einbettmasse fixierter sowie gegeneinander und gegenüber dem Gehäuse
abgedichteten Kapillaren, die in je einer Stirnfläche enden,
an die je eine Ein- bzw. Ausströmkammer für das Blut anschließt,
und mit einer zwischen den Einbettmassen um die Kapillaren herum vorgesehenen Dialysatkammer mit zwei gehäuseseitigen Anschlüssen, dadurch gekennzeichnet, daß mindestens eine der
beiden Stirnflächen (4) aus Einbettmasse (3) und Kapillare (2)
mit einer Beschichtung (15, 20) versehen ist.

2, Kapillardialysator nach Anspruch 1, dadurch gekennzeichnet,
daß die Beschichtung (15) auch um die Innenkante der einzelnen
Kapillare (2) herum bis zu einer gewissen Tiefe an der Innenwand der Kapillare (2) vorgesehen ist.

3. Kapillardialysator nach Anspruch 1 oder 2, dadurch gekennzeichnet, daß die Beschichtung (15) aus Polyurethan und die
Kapillaren (2) aus regenerierter Zellulose bestehen.

4. Kapillardialysator nach Anspruch 1, dadurch gekennzeichnet,
daß die Beschichtung (20) aus einem Material besteht, das eine
poröse Filterstruktur aufweist und die Anlagerung von Eiweißstoffen aus dem Blut gestattet.

5. Kapillardialysator nach Anspruch 4, dadurch gekennzeichnet,
daß die Beschichtung (20) mit der porösen Filterstruktur aus
einem in zwei Lösungsmitteln gelösten Kunststoff besteht, wobei
die beiden Lösungsmittel unterschiedliche Verdampfungseigenschaften aufweisen.

6. Kapillardialysator nach Anspruch 4 oder 5, dadurch gekennzeichnet, daß die Beschichtung (20) mit der porösen Filterstruktur auf der Oberfläche der gesamten Ein- bzw. Ausströmkammer (8, 9) vorgesehen ist.

7. Kapillardialysator nach einem der Ansprüche 1 bis 3, dadurch
gekennzeichnet, daß die Beschichtung (15, 20) aus zwei Schichten
besteht, von denen die zuerst aufgebrachte den Haftgrund für die
zweite Beschichtung (20) bildet und die zweite Beschichtung (20)
gemäß den Merkmalen des Anspruches 4 ausgebildet ist.

8. Kapillardialysator nach Anspruch 7, dadurch gekennzeichnet,
daß die erste Beschichtung (15) eine Dicke von etwa 5 - 20 µm
und die zweite Beschichtung (20) eine Dicke von etwa 5 - 50 µm
aufweist.
9. Kapillardialysator nach einem der Ansprüche 4 bis 8, dadurch
gekennzeichnet, daß die Beschichtung (20) mit der porösen Filterstruktur im wesentlichen aus Polysulfon, Polyamid, Polymethylmethacrylat, Polycarbonat oder Zelluloseacetaten besteht.

Fig.1

Fig. 2

Fig. 3

Fig. 4